# FASCICULE DE BREVET EUROPEEN

(11) **EP 3 002 541 B1**
(45) Date de publication et mention de la délivrance du brevet: **11.01.2017**
(21) Numéro de dépôt: 15186286.9
(22) Date de dépôt: 22.09.2015
(51) Int. Cl.: F41H 5/22, B60N 2/30, B60N 3/00, B60N 3/06, B60N 2/24, B60N 2/32

(54) **SIEGE POUR VEHICULE**
SITZ FÜR FAHRZEUG
VEHICLE SEAT

(30) Priorité: 25.09.2014 FR 1402179
(43) Date de publication de la demande: 06.04.2016
(73) Titulaire: NEXTER Systems, 42328 Roanne (FR)
(72) Inventeur: Jacquemont, Jacky, 18023 Bourges (FR); Poirmeur, Xavier, 18023 Bourges (FR)
(74) Mandataire: Debay, Yves

(56) Documents cités:
- EP-A1- 2 444 279
- EP-A1- 2 679 441
- WO-A2-2006/022880
- FR-A1- 2 350 983
- US-A1- 2014 132 040

## Description

Le domaine technique de l'invention est celui des sièges pour véhicule et en particulier pour véhicule blindé.

Les sièges comportent d'une façon classique un dossier et une assise, le dossier est souvent inclinable par rapport à l'assise pour le confort de l'usager.

Les véhicules blindés sont généralement dotés d'ouvertures ou trappes aménagées au niveau du plafond et qui permettent à un usager de sortir la tête hors du véhicule pour réaliser des observations ou bien pour mettre en oeuvre une arme montée sur le toit du véhicule.

Il se pose alors la question de faciliter ce positionnement de l'usager hors du véhicule au travers de la trappe.

On connaît par le brevet EP2221211 un siège pour véhicule blindé dont le dossier peut être basculé contre l'assise. La face arrière du dossier joue alors le rôle d'une plateforme sur laquelle un observateur ou un tireur peut monter pour sortir la tête hors du véhicule.

Ce siège présente l'inconvénient de nécessiter une manoeuvre du dossier de siège de grande amplitude ce qui n'est pas toujours facile lorsque les sièges voisins sont occupés par d'autres personnes. La rapidité de mise en place de la plateforme n'est donc pas assurée.

On connaît également par le brevet US2014/132040 un siège pour véhicule automobile qui comporte au niveau de son dossier un passage traversant qui est obturable par un panneau portant le rembourrage du dossier. Le dispositif qui est ainsi décrit permet, au choix, de fournir une tablette pouvant recevoir un objet, ou bien autorise un passager arrière à reposer ses pieds sur la tablette au travers du dossier du siège. Une telle tablette a une résistance mécanique limitée et ne peut recevoir un opérateur en position debout.

On connaît aussi par le brevet FR2350983 un siège pour enfant pouvant être incorporé au dossier d'une banquette d'automobile. Ce dispositif ne permet pas non plus à un adulte de se positionner debout.

C'est le but de l'invention que de proposer un siège permettant d'assurer également une fonction de plateforme d'observation ou de tir, le passage d'une position assise à une position debout sur la plateforme étant facilité et très rapide.

Ainsi l'invention a pour objet un siège pour véhicule et en particulier pour véhicule blindé, ledit siège comportant un dossier et une assise, ledit siège comportant une tablette basculante articulée par rapport au dossier, tablette pouvant se positionner dans une position repliée dans un logement du dossier au niveau d'une face avant de ce dernier qui est destinée à recevoir le dos d'un usager assis sur le siège, siège caractérisé en ce qu'il comporte des accoudoirs sur lesquels la tablette vient en appui dans une position dépliée.

Avantageusement, la tablette pourra comporter une face avant portant un rembourrage, face qui est destinée à recevoir le dos de l'usager assis sur le siège.

Selon un mode particulier de réalisation, la tablette pourra comprendre une structure en forme de caisson ouvert comportant une plaque de fond formant une plateforme destinée à recevoir l'usager en position debout.

Le caisson pourra être une structure en tôle pliée comprenant la plaque de fond et quatre rebords solidaires de la plaque de fond.

Le caisson pourra ainsi recevoir le rembourrage.

Le dossier du siège pourra être inclinable.

Le siège pourra comporter au moins une armature comportant une partie supérieure sur laquelle l'accoudoir est en appui lorsqu'il est déplié

L'invention sera mieux comprise à la lecture de la description qui va suivre d'un mode particulier de réalisation, description faite en référence aux dessins annexés et dans lesquels :
- La figure 1 est une vue en perspective du siège selon l'invention avec un usager assis.
- La figure 2 est une vue de ce même siège avec l'usager debout sur la tablette.
- La figure 3 est une vue partielle en perspective montrant le dossier avec la tablette en position repliée.
- La figure 4 est une vue partielle en perspective de trois-quarts montrant le dossier avec la tablette en position basculée.
- La figure 5 est une vue partielle en perspective de face montrant le dossier avec la tablette en position basculée.
- La figure 6 est une vue en perspective inférieure montrant le dossier avec la tablette en position basculée.

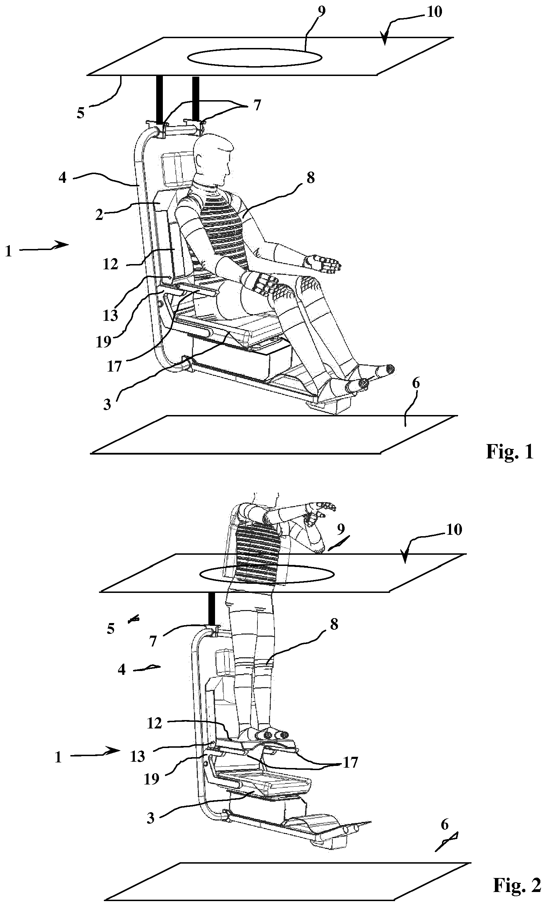

En se reportant à la figure 1, un siège 1 pour véhicule comporte un dossier 2 et une assise 3. Le siège 1 est solidaire d'une structure tubulaire 4 qui est fixée au niveau du plafond 5 du véhicule par des colliers 7 (la liaison des colliers 7 au plafond 5 n'est pas représentée en détails).

Ainsi le siège 1 se trouve suspendu au-dessus d'un plancher 6, ce qui assure à un usager 8 assis sur le siège 1 une protection contre les déformations du plancher 6 consécutives par exemple à l'explosion d'une mine sous le véhicule. Plafond 5 et plancher 6 sont représentés ici de façon très schématique. On a représenté par une ellipse une ouverture 9 qui est réalisée dans le plafond 5 et positionnée au-dessus du siège 1. Cette ouverture est bien entendue obturée par une trappe mobile (non représentée). Elle permet à l'usager 8 de sortir la tête hors du véhicule pour réaliser une observation ou bien pour manoeuvrer une arme portée par la paroi externe 10 du véhicule (arme non représentée).

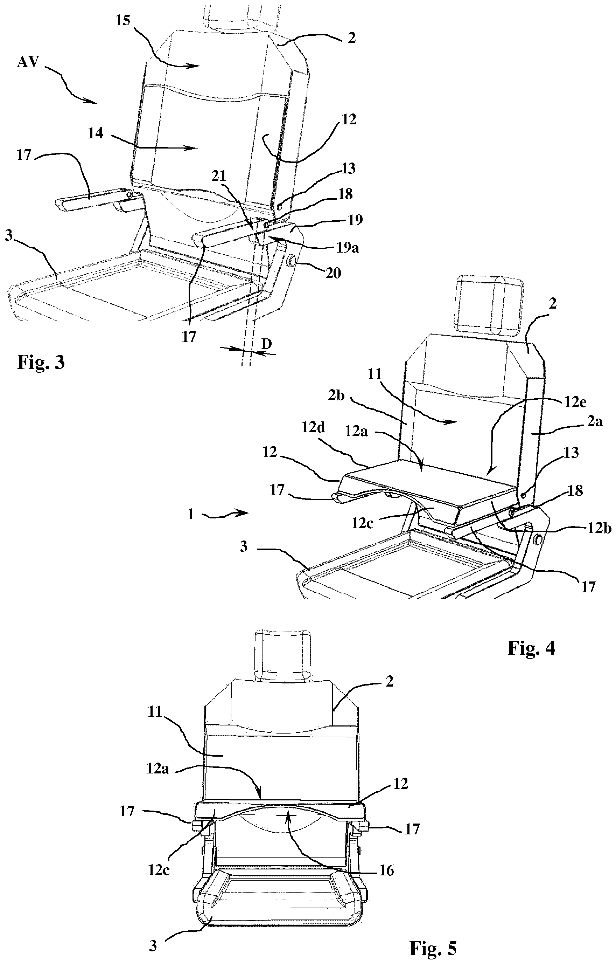

Les figures 3, 4 et 5 montrent le siège de façon plus précise. On voit ainsi sur la figure 4 que le dossier 2 comporte un logement 11 sensiblement parallélépipédique qui peut recevoir une tablette 12 qui est articulée par rapport au dossier 2 par deux pivots 13. Il y a un pivot 13 de chaque côté de la tablette 12, pivot qui est articulé sur des parois latérales 2a et 2b du dossier 2 (parois délimitant le logement 11). Le logement 11 est aménagé au niveau d'une face avant AV du dossier 2 qui est destinée à recevoir le dos d'un usager assis sur le siège (voir figure 1).

La tablette 12 peut ainsi se positionner dans le logement 11 du dossier 2 et elle adopte alors une position repliée qui est représentée à la figure 3.

La tablette 12 comprend une structure en forme de caisson ouvert, comportant une plaque de fond 12a qui constitue une plateforme destinée à recevoir l'usager 8 en position debout (figure 2). La structure de caisson de la tablette 12 est une structure en tôle pliée qui comprend la plaque de fond 12a et quatre rebords 12b, 12c, 12d et 12e qui sont solidaires de la plaque de fond 12a (figure 4). La tôle sera par exemple une tôle d'acier.

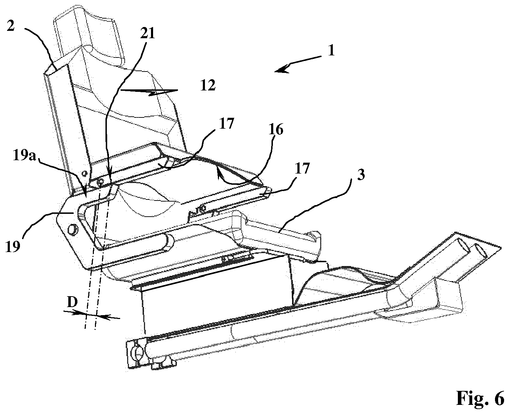

Le caisson ouvert reçoit un rembourrage 14, par exemple en mousse. Ce rembourrage forme la face avant de la tablette 12 et il se situe dans le prolongement du rembourrage du reste du dossier 2 lorsque la tablette 12 est en position repliée (figure 3). On remarque ainsi sur les figures que le dossier 2 comporte un profil concave 15 ergonomique qui reçoit le dos de l'usager et que ce profil concave se prolonge au niveau du rembourrage 14 de la tablette 12. La tablette 12 comporte donc des échancrures 16 au niveau de ses rebords avant 12d et arrière 12e (figures 5 et 6).

Le rembourrage 14 est destiné à recevoir le dos de l'usager assis sur le siège. Ainsi le confort de l'usager n'est pas dégradé lorsque la tablette est en position repliée.

Le siège 1 comporte des accoudoirs 17 qui sont articulés sur des pivots 18 par rapport à une armature 19 solidaire de l'assise 3. Le dossier 2 est lui-même articulé au niveau d'axes 20 par rapport à l'armature 19.

Ainsi lorsque la tablette 12 est positionnée en position dépliée elle vient en appui sur les accoudoirs 17 (figures 4, 5 et 6). Il n'est donc pas nécessaire de prévoir un moyen d'arrêt particulier pour le maintien de la tablette 12 en position dépliée. Les accoudoirs 17, leurs pivots 18 et l'armature 19 seront bien entendu dimensionnés pour supporter le poids prévu pour les usagers 8. Comme on le voit sur la figure 3, chaque armature 19 a un profil en C et comporte une partie supérieure (ou branche supérieure) 19a qui est sensiblement parallèle à l'accoudoir 17 en position dépliée. La branche supérieure 19a a une longueur telle que le pivot 18 de l'accoudoir se trouve au dessus de la branche supérieure 19a et à distance de l'extrémité 21 de celle-ci.

Lorsque l'accoudoir est déplié il est donc en appui sur la branche supérieure 19a et sur une longueur D. Une telle disposition augmente la résistance mécanique du dispositif et permet de ne pas définir des accoudoirs 17 trop volumineux. L'essentiel de la résistance au poids de l'usager 8 est alors assuré par l'armature 19. L'armature pourrait avoir une forme plus massive et non un profil en C. L'accoudoir viendrait toujours en appui sur une partie supérieure de l'armature et sur une longueur donnée D.

La forme en C décrite ici est cependant préférée car elle assure à la fois résistance et légèreté.

La figure 2 montre le siège 1 avec la tablette 12 en position basculée. L'usager 8 est monté sur la tablette 12 et il peut sortir la tête hors du véhicule au travers de l'ouverture 9. Le passage de la position tablette repliée (figure 1) à tablette basculée (figure 2) est très rapide et l'usager n'a pas besoin de modifier l'inclinaison du dossier 2 du siège pour ce changement de position de la tablette. La position horizontale de la tablette est en effet donnée par les accoudoirs 17 qui ne bougent pas avec l'inclinaison du dossier. La hauteur de la tablette 12 n'est donc pas modifiée par l'inclinaison du dossier 2.

Avantageusement on pourra prévoir un profil anti dérapant au niveau de la plaque de fond 12a de la tablette. Ce profil pourra être collé sur la plaque de fond ou bien formé par des rainures ou ondulations solidaires de la plaque de fond 12a.

## Revendications

1. Siège (1) pour véhicule et en particulier pour véhicule blindé, ledit siège comportant un dossier (2) et une assise (3), ledit siège comportant une tablette (12) basculante articulée par rapport au dossier (2), tablette (12) pouvant se positionner dans une position repliée dans un logement (11) du dossier (2) au niveau d'une face avant de ce dernier qui est destinée à recevoir le dos d'un usager assis sur le siège, siège ***caractérisé en ce qu***'il comporte des accoudoirs (17) sur lesquels la tablette (12) vient en appui dans une position dépliée.

2. Siège selon la revendication 1, **caractérisé en ce que** la tablette (12) comporte une face avant portant un rembourrage (14) et qui est destinée à recevoir le dos de l'usager assis sur le siège.

3. Siège selon une des revendications 1 ou 2, **caractérisé en ce que** la tablette (12) comprend une structure en forme de caisson ouvert comportant une plaque de fond (12a) formant une plateforme destinée à recevoir l'usager en position debout.

4. Siège selon la revendication 3, **caractérisé en ce que** le caisson est une structure en tôle pliée comprenant la plaque de fond (12a) et quatre rebords (12b, 12c, 12d, 12e)solidaires de la plaque de fond (12a).

5. Siège selon les revendications 2 et 4, **caractérisé en ce que** le caisson reçoit le rembourrage (14).

6. Siège selon une des revendications 1 à 5, **caractérisé en ce que** le dossier (2) est inclinable.

7. Siège selon une des revendications 1 à 6, **caractérisé en ce qu'**il comporte au moins une armature (19) comportant une partie supérieure (19a) sur laquelle l'accoudoir (17) est en appui lorsqu'il est déplié.

## Patentansprüche

1. Sitz (1) für ein Fahrzeug und insbesondere für ein gepanzertes Fahrzeug, wobei der genannte Sitz eine Rückenlehne (2) und eine Sitzfläche (3) umfasst, wobei der genannte Sitz ein klappbares Tablett (12) umfasst, das in Bezug auf die Rückenlehne (2) angelenkt ist, wobei das Tablett (12) in einer in einer Aufnahme (11) der Rückenlehne (2) an einer Frontfläche der Letzteren eingeklappten Position positioniert werden kann, die den Rücken eines auf dem Sitz sitzenden Benutzers aufnehmen soll, wobei der Sitz **dadurch gekennzeichnet ist, dass** er Armlehnen (17) umfasst, auf denen das Tablett (12) in einer auseinanderklappten Position abgestützt wird.

2. Sitz nach Anspruch 1, **dadurch gekennzeichnet, dass** das Tablett (12) eine Frontfläche aufweist, die eine Polsterung (14) trägt und zum Aufnehmen des Rückens des auf dem Sitz sitzenden Benutzers bestimmt ist.

3. Sitz nach Anspruch 1 oder 2, **dadurch gekennzeichnet, dass** das Tablett (12) eine Struktur in Form eines offenen Kastens hat, der eine Bodenplatte (12a) aufweist, die eine Plattform bildet, die zum Aufnehmen des Benutzers in einer stehenden Position bestimmt ist.

4. Sitz nach Anspruch 3, **dadurch gekennzeichnet, dass** der Kasten eine Winkelblechstruktur ist, die die Bodenplatte (12a) und vier Umrandungen (12B, 12C, 12D, 12E) einstückig mit der Bodenplatte (12A) hat.

5. Sitz nach einem der Ansprüche 2 und 4, **dadurch gekennzeichnet, dass** der Kasten die Polsterung (14) aufnimmt.

6. Sitz nach einem der Ansprüche 1 bis 5, **dadurch gekennzeichnet, dass** die Rückenlehne (2) verstellbar ist.

7. Sitz nach einem der Ansprüche 1 bis 6, **dadurch gekennzeichnet, dass** er wenigstens eine Armatur (19) umfasst, die einen oberen Teil (19a) umfasst, auf dem die Armlehne (17) abgestützt wird, wenn sie auseinandergeklappt ist.

## Claims

1. Seat assembly (1) for a vehicle and in particular for an armoured vehicle, said seat assembly comprising a backrest (2) and a seat (3), said seat assembly comprising a pivoting tray (12) which is articulated in relation to the backrest (2), the tray (12) being able to be positioned in a folded-up position in a housing (11) in the backrest (2) in a front face of the latter which is designed to receive the back of a user sitting on the seat assembly, the seat assembly being **characterised in that** it comprises armrests (17) on which the tray (12) comes to bear in a folded-down position.

2. Seat assembly according to claim 1, **characterised in that** the tray (12) comprises a front face carrying padding (14) which is designed to receive the back of the user sitting on the seat assembly.

3. Seat assembly according to one of claims 1 or 2, **characterised in that** the tray (12) comprises a structure in the form of an open box having a base plate (12a) forming a platform designed to receive the user in a standing position.

4. Seat assembly according to claim 3, **characterised in that** the box is a folded sheet-metal structure comprising the base plate (12a) and four edges (12b, 12c, 12d, 12e) integrally locked to the base plate (12a).

5. Seat assembly according to claims 2 and 4, **characterised in that** the box receives the padding (14).

6. Seat assembly according to one of claims 1 to 5, **characterised in that** the backrest (2) can be inclined.

7. Seat assembly according to one of claims 1 to 6, **characterised in that** it comprises at least one framework (19) comprising an upper portion (19a) on which the armrest (17) bears when it is folded down.
